# FASCICULE DE BREVET EUROPEEN

(11) **EP 3 928 501 B1**
(45) Date de publication et mention de la délivrance du brevet: **25.12.2024**
(21) Numéro de dépôt: 20704917.2
(22) Date de dépôt: 20.02.2020
(51) Int. Cl.: H04M 3/493, G06Q 30/00, G10L 15/26, G10L 17/00, H04W 12/06, G06F 21/32, G06Q 30/018, H04L 9/40, H04M 3/42

(54) **PROCÉDÉ DE GESTION D'ACCÈS D'UN UTILISATEUR À UN SERVICE VOCAL, DISPOSITIF, SYSTÈME ET PROGRAMMES CORRESPONDANTS**
VERFAHREN ZUR VERWALTUNG DES ZUGANGS EINES BENUTZERS ZU EINEM SPRACHDIENST, ENTSPRECHENDE VORRICHTUNG, SYSTEM UND PROGRAMME
METHOD FOR MANAGING THE ACCESS OF A USER TO A VOICE SERVICE, CORRESPONDING DEVICE, SYSTEM AND PROGRAMS

(30) Priorité: 22.02.2019 FR 1901811
(43) Date de publication de la demande: 29.12.2021
(73) Titulaire: Banks and Acquirers International Holding, 75015 Paris (FR)
(72) Inventeur: DUBREUIL, Arnaud, 75016 PARIS (FR); D'AVOUT, Quitterie, 75011 PARIS (FR); QUENTIN, Pierre, 95880 ENGHIEN LES BAINS (FR)
(74) Mandataire: Germain Maureau
(86) Numéro de dépôt international: PCT/EP2020/054500
(87) Numéro de publication internationale: WO 2020/169741

(56) Documents cités:
- US-A1- 2002 004 831
- US-A1- 2002 111 809
- US-A1- 2016 254 000
- US-B1- 7 227 930

## Description

### 1. Domaine de l'invention

La présente technique se rapporte au domaine des assistants vocaux permettant à des utilisateurs d'accéder à différents services via un dispositif électronique, comme par exemple des services de commerce vocal, d'accès à des produits culturels (musique, films ...), à des informations, services de prise de rendez-vous, de contact, de pilotage d'objets connectés ...

La présente technique concerne plus particulièrement la phase d'inscription (ou de création de compte) d'un utilisateur à un tel service, avant de pouvoir accéder au service lui-même.

### 2. Art antérieur

Les assistants vocaux représentent un nouveau canal d'interaction avec les utilisateurs et de nouveaux usages de services, dits services vocaux, comme ceux décrits ci-dessus, émergent.

Afin de bénéficier de tels services, un utilisateur doit d'abord s'inscrire et créer son empreinte vocale en partageant de l'audio et des données personnelles avec une tierce partie.

Cependant, avant de partager sa voix et ses données personnelles, l'utilisateur doit donner son consentement pour autoriser cette tierce partie à accéder à ces données personnelles, en acceptant les « termes et conditions d'utilisation » (ci-après notés termes et conditions) du service en question. Cette procédure s'appelle l'option d'adhésion ou le consentement (en anglais « *opt-in* »)*.*

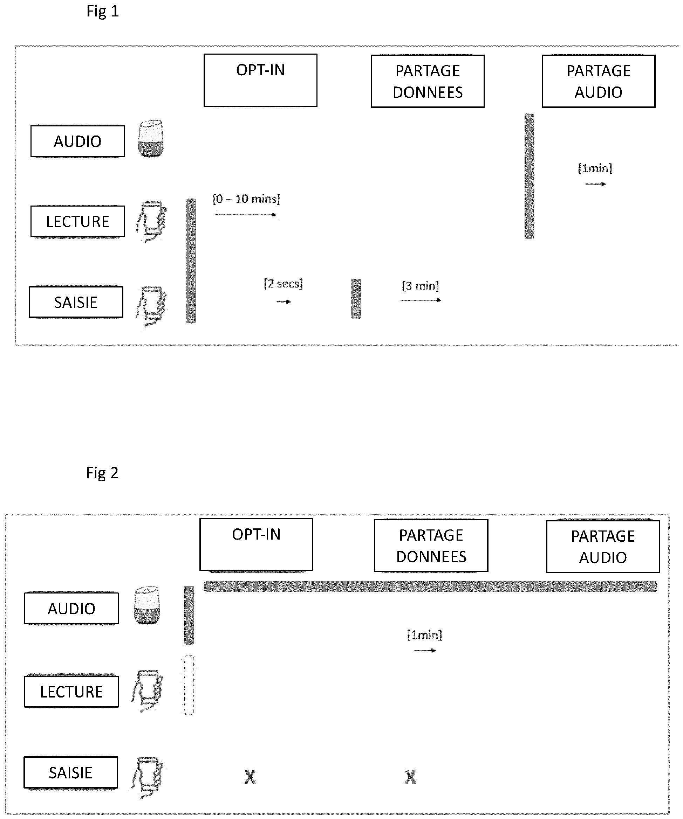

Actuellement, dans la procédure d'inscription à un tel service vocal, l'obtention du consentement peut constituer un obstacle pour l'utilisateur, en terme d'ergonomie. En effet, comme illustré en [fig. 1], l'utilisateur doit lire les termes et conditions d'utilisation du service, lors d'une étape « LECTURE » puis les accepter via une action, lors d'une étape « SAISIE », comme un clic sur un bouton d'une page Internet. L'utilisateur doit également la plupart du temps saisir les données personnelles requises, lors d'une étape « PARTAGE DONNEES ». Ensuite, l'utilisateur doit énoncer des phrases type, ou un mot de passe, à plusieurs reprises, lors d'une étape « PARTAGE AUDIO », afin de créer une empreinte vocale de référence, qui servira ensuite, lors de l'accès au service vocal, à l'identifier et/ou l'authentifier.

Ainsi, alors qu'un service accessible via un assistant vocal constitue pour un utilisateur une expérience conviviale améliorée (par exemple pour faire des achats rapides dans le cadre du commerce vocal, ou pour obtenir des informations ou de la musique instantanément), la phase d'inscription reste « classique » et peu ergonomique. Elle peut en effet durer plus de 10 minutes, à partir du moment où l'utilisateur commence à prendre connaissance des termes et conditions d'utilisation avant de les accepter, via une saisie.

De plus, cette phase d'inscription nécessite la plupart du temps deux dispositifs, lorsque le dispositif sur lequel l'assistant vocal est installé (par exemple une enceinte connectée) ne permet pas la saisie du consentement aux termes et conditions d'utilisation du service vocal. Dans ce cas, l'utilisateur doit également utiliser son smartphone par exemple, ce dernier devant être apparié au dispositif d'assistant vocal.

De ce fait, il existe un besoin, de la part des utilisateurs, d'être informé d'une manière simple et rapide des termes et conditions d'utilisation d'un tel service vocal et d'avoir une expérience utilisateur conviviale, rapide et sans friction lors d'une inscription à ce service vocal.

Il existe également un besoin, de la part des commerçants, de fournir une solution simple et rapide pour l'inscription d'un utilisateur à un tel service vocal, notamment dans le cadre du commerce vocal, afin de ne pas « perdre » de clients potentiels dès la phase d'inscription.

Par ailleurs, les techniques actuelles présentent un inconvénient important en terme de sécurité des données personnelles des utilisateurs et surtout de sécurisation de l'inscription et particulièrement du consentement. Cet inconvénient réside dans la faiblesse des preuves pouvant être apportées quant à l'authentification de l'utilisateur ayant donné son consentement. Or cet aspect est primordial lorsqu'il s'agit ensuite d'acheter des biens ou des services par un paiement vocal, c'est-à-dire lorsqu'une transaction de paiement est autorisée sur la base du consentement préalable et de l'authentification de l'utilisateur concerné.

En effet, actuellement, lorsqu'il est nécessaire de fournir des preuves d'un consentement d'un utilisateur, ce sont des traces informatiques qui sont utilisées, sous la forme de fichiers journaux traçant les différentes connexions Internet du dispositif électronique ayant servi à l'utilisateur pour son consentement. Or, ces traces informatiques permettent d'identifier le dispositif ayant servi au consentement mais ne permettent pas l'authentification de l'utilisateur lui-même. De plus, il est relativement facile de falsifier de telles traces informatiques, voire d'en fabriquer.

Il est connu dans l'état de la technique, la demande de brevet US2002/0004831A1, un système authentification ou d'autorisation impliquant un visiteur se connectant à un site internet, et une étape d'appel par téléphone du visiteur pour obtenir une information de confirmation pour vérification. Il est connu de la demande de brevet US2002/0111809A1, un système de vérification pour documenter vocalement un consentement d'un individu par rapport à une offre de service téléphonique longue distance.

Il existe donc un besoin pour une technique d'inscription et de consentement à un service accessible via un assistant vocal, ou service vocal, convivial, rapide et sécurisé en terme d'authentification des utilisateurs.

### 3. Exposé de l'invention

L'invention propose une technique liée à un procédé d'inscription à un service vocal selon la revendication 1.

L'invention se fonde sur l'obtention d' échantillons vocaux de l'utilisateur servant également à obtenir des informations ou données personnelles de l'utilisateur, sans qu'il ait besoin de les saisir via un dispositif distinct du dispositif de traitement vocal, ou via une autre interface comme la saisie de caractère par exemple.

Selon un aspect particulier, le procédé d'inscription comprend en outre une étape de calcul, à partir dudit au moins un échantillon vocal de l'utilisateur, d'une empreinte vocale de référence associée à l'utilisateur.

Ainsi, le ou les échantillons vocaux de l'utilisateur servent également à calculer une empreinte vocale de référence associée à l'utilisateur, en vue de l'authentification ultérieure de l'utilisateur lorsqu'il souhaitera accéder au service vocal auquel il s'est inscrit.

Ainsi, la présente technique repose sur une approche nouvelle et inventive de l'obtention du consentement d'un utilisateur aux conditions d'accès et d'utilisation d'un service vocal basée sur l'utilisation de l'échantillon vocal acquis en vue de son inscription au service vocal (en particulier pendant la phase d'apprentissage mise en oeuvre pour calculer son empreinte vocale de référence). De cette manière, l'obtention du consentement d'un utilisateur aux conditions d'accès et d'utilisation d'un service vocal est entièrement vocale elle-même, améliorant grandement l'expérience utilisateur par rapport aux techniques actuelles. En effet, selon la technique proposée, l'utilisateur n'a pas besoin d'effectuer une action supplémentaire, comme par exemple une saisie (clic sur un bouton « Accepter ») sur un dispositif affichant les conditions du service vocal, pour donner son consentement, l'enregistrement de sa voix lors de son inscription suffit.

Selon un mode de réalisation, l'étape d'obtention d'au moins une information de validation d'un consentement de l'utilisateur comprend les sous-étapes suivantes :
- traitement dudit au moins un échantillon vocal de l'utilisateur délivrant au moins une information textuelle interprétable ;
- interprétation de ladite au moins une information textuelle interprétable délivrant ladite au moins une information de validation d'un consentement de l'utilisateur.

Ainsi, selon ce mode de réalisation, le ou les échantillons vocaux de l'utilisateur captés par le dispositif de traitement vocal sont traités de manière à obtenir du texte interprétable, pouvant être ensuite comparé aux termes et conditions d'utilisation du service vocal afin de déterminer si l'utilisateur a bien énoncé son consentement à ces termes et conditions.

Par exemple, les phrases énoncées par l'utilisateur, captées par le dispositif de traitement vocal, sont transcrites par un algorithme de voix vers texte (« Speech-To-Text » en anglais) pour délivrer un texte pouvant être comparé avec le texte des termes et conditions d'utilisation du service vocal.

Si l'utilisateur a énoncé les phrases requises, par lesquelles il adhère expressément aux termes et conditions d'utilisation du service vocal, donnant ainsi son consentement, la comparaison est positive et le consentement de l'utilisation est considéré comme obtenu.

Si, en revanche, l'utilisateur n'a pas répété correctement les phrases requises, la comparaison est négative et le consentement n'est pas obtenu.

Selon un aspect particulier de la présente technique, ledit au moins un échantillon vocal à partir duquel est obtenue ladite au moins une information de validation d'un consentement de l'utilisateur est associé à l'utilisateur et sauvegardé comme preuve du consentement de l'utilisateur.

Ainsi, selon ce mode de réalisation, l'échantillon vocal, par lequel l'utilisateur donne son consentement aux termes et conditions d'utilisation du service vocal, est sauvegardé de manière à pouvoir servir de preuve légale ultérieure de l'obtention du consentement de l'utilisateur. En effet, la voix de l'utilisateur pouvant l'authentifier, cet enregistrement prouve que c'est bien le bon utilisateur qui a donné son consentement. Il s'agit donc d'une preuve forte légalement, contrairement aux preuves constituées par des traces informatiques utilisées par les techniques actuelles.

Selon un autre aspect, le procédé d'inscription comprend une étape de vérification de fiabilité de l'empreinte vocale de référence avec au moins un deuxième échantillon vocal de l'utilisateur.

Ainsi, selon ce mode de réalisation, une fois que l'empreinte vocale de référence est calculée pour l'utilisateur, à partir d'échantillons audio déjà captés, d'autres échantillons audio sont demandés à l'utilisateur de manière à s'assurer que l'empreinte vocale de référence permet effectivement de l'authentifier.

Si tel n'est pas le cas, une empreinte vocale de référence différente est calculée, à partir d'un plus grand nombre d'échantillons audio, ou d'une plus grande durée d'échantillons audio.

Cette étape permet d'optimiser la phase d'apprentissage de la voix de l'utilisateur au moment de son inscription au service vocal, en vue de fiabiliser son authentification ultérieure au moment d'utiliser le service.

L'invention propose aussi une technique liée à un serveur d'interface selon la revendication 5.

Un tel serveur d'interface est notamment apte à mettre en oeuvre les étapes du procédé d'inscription décrit précédemment, selon les différents modes de réalisation. Enfin, l'invention propose une technique liée à un produit programme d'ordinateur selon la revendication 6.

Selon une implémentation préférée, les différentes étapes des procédés selon la technique proposée sont mises en oeuvre par un ou plusieurs logiciels ou programmes d'ordinateur, comprenant des instructions logicielles destinées à être exécutées par un processeur de données d'un dispositif d'exécution selon la technique proposée et étant conçu pour commander l'exécution des différentes étapes des procédés, mis en oeuvre au niveau du terminal de communication, du dispositif électronique d'exécution et/ou du serveur distant, dans le cadre d'une répartition des traitements à effectuer et déterminés par un code source.

En conséquence, la technique proposée vise aussi des programmes, susceptibles d'être exécutés par un ordinateur ou par un processeur de données, ces programmes comportant des instructions pour commander l'exécution des étapes des procédés tel que mentionnés ci-dessus.

Un programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un support mobile (carte mémoire) ou un disque dur ou un SSD.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc. Les différents modes de réalisation mentionnés ci-dessus sont combinables entre eux pour la mise en oeuvre de la technique proposée.

### 4. Liste des figures

Ces caractéristiques, ainsi que d'autres, apparaîtront plus clairement à la lecture de la description suivante d'un mode de réalisation, donné à titre de simple exemple illustratif et non limitatif, et des figures annexées, parmi lesquelles :
[fig. 1] illustre un exemple de déroulement d'un consentement à un service vocal selon l'art antérieur ;
[fig. 2] illustre un exemple de déroulement d'un consentement à un service vocal selon un mode de réalisation de la technique proposée ;
[fig. 3] illustre les principales étapes d'un consentement à un service vocal selon un mode de réalisation de la technique proposée ;
[fig. 4] illustre un exemple de système de mise en oeuvre de la technique proposée, selon un mode de réalisation.

### 5. Description d'un mode de réalisation de l'invention

### 5.1. Principe général

Le principe général de la présente technique repose sur l'obtention d'un consentement utilisateur aux termes et conditions d'utilisation d'un service vocal de manière entièrement vocale.

Pour ce faire, la technique proposée est basée sur l'utilisation d'un ou des échantillons audio d'un utilisateur captés pour son inscription à un service vocal, et plus particulièrement pour l'étape d'apprentissage en vue de créer son empreinte vocale de référence, pour obtenir son consentement, au lieu de nécessiter une saisie, non vocale (par exemple un clic sur un bouton d'une page internet) de l'utilisateur.

Ainsi, lors de son inscription à un service vocal, un utilisateur doit créer son empreinte vocale de façon à pouvoir être authentifié lorsqu'il souhaitera accéder au service vocal en question, par exemple un service de commerce vocal via lequel il pourra payer par la voix.

De plus, avant de partager toute information/donnée personnel (par exemple pour la livraison du produit commandé dans le cadre d'un service de commerce vocal), il doit accepter les termes et conditions spécifiques du service en question.

Cette étape, comme déjà indiqué ci-dessus, constitue une phase de consentement au coeur de la présente technique, comme illustré par la [fig. 2] décrite ci-après. Ainsi, pendant la phase d'inscription au service vocal, l'utilisateur va partager une certaine durée d'audio (environ une minute) de manière à ce que les trois éléments suivants soient collectés en même temps :
- des échantillons audio de sa voix pour le calcul ultérieur de l'empreinte vocale de référence de l'utilisateur (« PARTAGE AUDIO ») ;
- des données personnelles énoncées par l'utilisateur, par exemple une adresse pour la livraison d'un produit acheté, ou une adresse électronique pour l'envoi de facture associée ou d'informations par courriel « PARTAGE DONNEES » ;
- le consentement de l'utilisateur aux termes et conditions d'utilisation du service vocal (« OPT-IN »).

La présente technique consiste donc à combiner les critères requis pour finaliser l'inscription de l'utilisateur, c'est-à-dire l'obtention des trois éléments cités ci-dessus uniquement par la captation de la voix de l'utilisateur, tout en rendant l'expérience utilisateur meilleure.

Par exemple, l'utilisateur est amené à répéter des phrases comme « *Mon nom est X et j'accepter de partager ma voix avec Y »* ou « *J'accepte de partager mes données personnelles pour avoir accès au service vocal de Y ».*

Ensuite, l'utilisateur est amené à répéter les principaux aspects des termes et conditions du consentement et à indiquer qu'il les accepte. L'utilisateur peut par exemple après avoir pris le temps de les lire sur son smartphone auparavant ou ces principaux aspects peuvent lui avoir été énoncés oralement.

Enfin, ces échantillons audio de la voix de l'utilisateur constituant un partage de ses données personnelles et son consentement, sont également utilisés pour calculer l'empreinte vocale de référence de l'utilisateur, sans que ce dernier ne soit obligé de répéter des phrases type ou un mot de passe, comme c'est le cas dans les solutions de l'art antérieur qui nécessitent également une répétition de ces phrases type ou mot de passe pour l'authentification de l'utilisateur au moment de son accès au service vocal concerné.

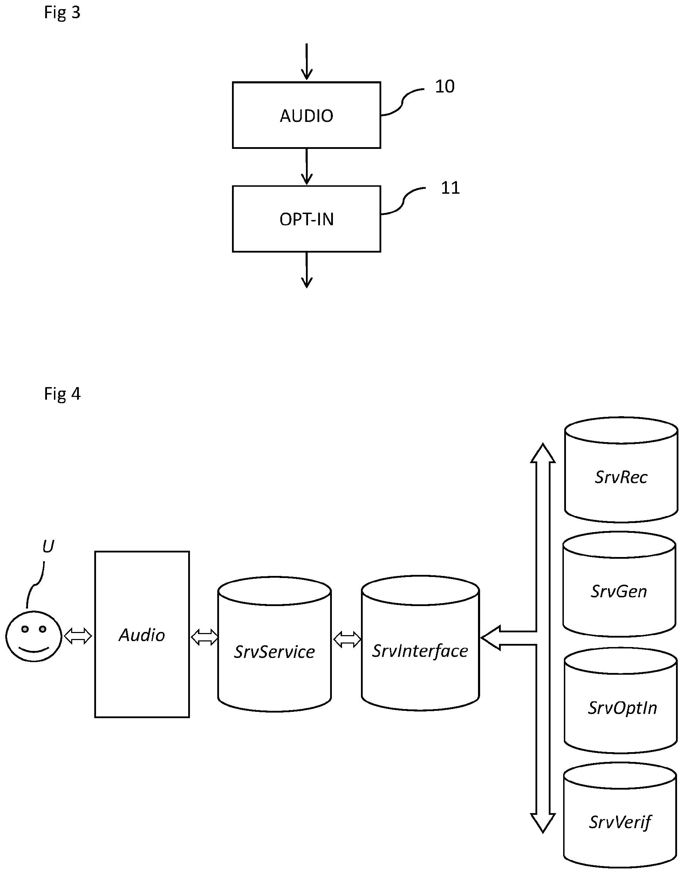

Par ailleurs, l'architecture du système de la présente technique, décrite plus en détail ci-après en relation avec la [fig. 4], assure qu'il n'y a pas de possibilité d'un accès concurrent à l'enregistrement des échantillons audio de l'utilisateur et à l'empreinte vocale de référence qui lui est associée, de manière à ce qu'aucun attaquant ne puisse pas recréer des empreintes vocales à partir de ces enregistrements audio ou ne puisse pas réaffecter des empreintes vocales à des enregistrements audio. Ainsi, la sécurité de l'inscription d'un utilisateur à un service vocal est assurée.

Pour finir, la technique proposée permet également de conserver à la fois l'empreinte vocale de référence de l'utilisateur et les échantillons audio de l'utilisateur servant à la calculer. De ce fait, ces échantillons audio portant le consentement oral de l'utilisateur aux termes et conditions du service vocal, ils constituent une preuve très forte pour l'authentification de l'utilisateur auquel est associé un consentement

### 5.2. Description d'un mode de réalisation

On présente maintenant plus en détail un mode de réalisation de la technique proposée, en relation avec les [fig. 3] et [fig. 4].

La [fig. 3] illustre les principales étapes de la technique proposée, selon lesquelles on obtient au moins un échantillon vocal de l'utilisateur souhaitant s'inscrire à un service vocal, par l'intermédiaire d'un dispositif électronique de traitement vocal comprenant au moins un composant de captation d'échantillons audio. Par exemple, un tel dispositif de traitement vocal correspond à une enceinte connectée ou à un smartphone sur laquelle/lequel est installé un assistant vocal. De tels dispositifs comprennent en effet des moyens de captation, par l'intermédiaire d'un microphone par exemple, d'échantillons audio.

Selon la technique proposée, l'utilisateur est incité à énoncer une ou plusieurs phrases représentatives des termes et conditions d'utilisation du service vocal auquel il souhaite s'inscrire, ou simplement une phrase par laquelle il indique qu'il accepte les termes et conditions d'utilisation du service vocal. Ces phrases sont donc captées par le dispositif de traitement vocal et traitées, selon la technique proposée, par un serveur d'interface, décrit plus en détail ci-dessous.

La première étape principale mise en oeuvre par le serveur d'interface est donc une étape d'obtention 10, par l'intermédiaire du dispositif de traitement vocal précité, d'au moins un échantillon vocal de l'utilisateur.

La deuxième étape principale mise en oeuvre par le serveur d'interface est une étape d'obtention 11, à partir de cet ou ces échantillons vocaux de l'utilisateur, d'au moins une information de validation d'un consentement de l'utilisateur aux conditions d'accès au service vocal. Cette étape est plus communément appelée option d'adhésion ou consentement, ou encore « Opt-In » en anglais.

Selon la technique proposée, il s'agit ici de pouvoir s'assurer du consentement de l'utilisateur uniquement en se basant sur des échantillons vocaux, c'est-à-dire en extrayant d'un enregistrement d'un échantillon audio au moins une information de validation d'un consentement. Cette étape est décrite plus en détail ci-dessous, en relation avec la [fig. 4].

Cette [fig. 4] illustre un exemple de système pouvant mettre en oeuvre la technique proposée, et en particulier les différents modules ou serveurs intervenant, ainsi que leurs inter-relations.

On décrit donc ci-après un exemple de déroulement d'une inscription d'un utilisateur à un service vocal, ainsi que les dispositifs mettant en oeuvre les différentes étapes de cette inscription, selon la technique proposée.

Lorsqu'un utilisateur *U* souhaite s'inscrire à un service vocal, il émet une requête d'inscription à ce service, par l'intermédiaire d'un dispositif électronique *Audio* proposant du traitement vocal, comme une enceinte ou un smartphone.

Cette requête d'inscription vocale est reçue par le dispositif de traitement vocal *Audio* et transmise à un serveur de service *SrvService,* par exemple un serveur de commerce vocal, auquel est connecté, ou apparié le dispositif de traitement vocal *Audio.*

Le serveur de service *SrvService,* en relation avec un serveur d'interface *SrvInterface,* traite la requête d'inscription vocale et délivre une requête d'inscription textuelle interprétable. Ce traitement consiste par exemple à appliquer un algorithme, connu en soi, de conversion de parole en texte (« *Speech-To-Text »* en anglais*)* afin de délivrer un texte représentatif des paroles prononcées par l'utilisateur *U*.

Cette requête d'inscription textuelle interprétable est ensuite transmise, via le serveur d'interface *SrvInterface,* à un module de gestion de consentement utilisateur, correspondant par exemple à un autre serveur *SrvOptIn.*

Le serveur *SrvOptIn* prend alors en charge cette requête et transmet notamment en retour des éléments représentatifs des termes et conditions d'utilisation du service vocal requis par l'utilisateur *U*. Ces éléments représentatifs peuvent être par exemple le contenu complet des termes et conditions d'utilisation du service vocal, ainsi qu'une ou plusieurs phrases dites clés correspondant à des éléments clés de ces termes et conditions d'utilisation. Par exemple, ces phrases seront à répéter par l'utilisateur *U* au moment de son inscription vocale, afin de mettre en oeuvre l'obtention de son consentement de manière vocale également.

Selon une première variante, il est possible d'afficher les termes et conditions d'utilisation, ainsi que les phrases clés sur un dispositif électronique associé à l'utilisateur *U*, par exemple son smartphone ou son ordinateur, distinct du dispositif de traitement vocal *Audio.* De cette manière, l'utilisateur *U* peut lire à haute voix ce qui s'affiche sur son smartphone de façon à ce que cela soit par le dispositif de traitement vocal *Audio.*

Selon une deuxième variante, le dispositif de traitement vocal *Audio* énonce d'abord les phrases clés afin que l'utilisateur *U* les répète à haute voix pour leur captation via le même dispositif de traitement vocal *Audio.*

Dans ces deux variantes, après avoir émis une requête d'inscription à un service vocal, l'utilisateur *U* reçoit en retour, préférentiellement toujours via le dispositif de traitement vocal *Audio,* les consignes pour cette inscription, lui indiquant par exemple qu'il doit répéter certaines phrases pour accepter les termes et conditions.

Lorsque l'utilisateur *U* commence à énoncer les phrases requises pour donner son consentement, par l'intermédiaire du dispositif de traitement vocal *Audio,* sa voix est donc captée et transmise, via le serveur de service *SrvService,* au serveur d'interface *SrvInterface* précédemment cité. Ce dernier met en oeuvre les étapes ci-après, en relation avec une pluralité de modules, par exemple mis en oeuvre par des serveurs distincts, pour des raisons de sécurité détaillées ci-après.

Une première étape consiste donc à sauvegarder, dans un module ou serveur de sauvegarde *SrvRec,* les échantillons vocaux captés par le dispositif de traitement vocal *Audio.* Le serveur d'interface *SrvInterface* est utilisé pour récupérer les échantillons audio/vocaux en provenance du dispositif de traitement vocal *Audio* et les transmettre au serveur de sauvegarde *SrvRec.*

Une deuxième étape consiste à s'assurer que les échantillons vocaux captés par le dispositif de traitement vocal *Audio* permettent bien d'obtenir le consentement de l'utilisateur *U* aux termes et conditions d'utilisation du service vocal. Par exemple, cette étape est mise en oeuvre par un module ou serveur de vérification biométrique *SrvVerif* qui reçoit les échantillons vocaux ou leur transcription en texte interprétable afin de les traiter. Si le résultat de cette vérification est négatif, c'est-à-dire que le consentement de l'utilisateur *U* n'est pas obtenu, les échantillons vocaux préalablement ou parallèlement sauvegardés par le serveur *SrvRec* sont effacés et la procédure d'inscription est proposée à nouveau à l'utilisateur *U*.

En revanche, si le consentement de l'utilisateur est obtenu, la procédure d'inscription se poursuit afin de mettre en oeuvre l'apprentissage vocal qui permet de calculer une empreinte vocale de référence de l'utilisateur *U* en vue de son authentification ultérieure lorsqu'il souhaitera accéder au service vocal auquel il s'est inscrit.

Une troisième étape, pouvant être mise en oeuvre par un module ou serveur de génération d'empreintes vocales *SrvGen,* parallèlement à la première étape et/ou à la deuxième étape, consiste à calculer, à partir d'au moins un échantillon audio/vocal capté par le dispositif de traitement vocal *Audio,* au moins une empreinte vocale de référence associée à l'utilisateur *U.* Là encore, le serveur d'interface *SrvInterface* est utilisé pour récupérer les échantillons audio/vocaux et les transmettre au serveur de génération d'empreintes vocales *SrvGen.* Cette génération d'empreintes vocales est mise en oeuvre par des algorithmes connus en soi et n'est pas détaillée ici.

Une quatrième étape consiste à valider que l'empreinte vocale de référence générée est conforme aux exigences du procédé d'authentification d'utilisateur, au moment de l'utilisation du service vocal. En effet, l'authentification de l'utilisateur *U* pour l'autoriser à utiliser un service vocal auprès duquel il s'est inscrit, consiste à comparer une empreinte vocale calculée à partir d'un échantillon audio capté pendant l'utilisation du service vocal et l'empreinte vocale de référence générée au moment de son inscription au service vocal. L'empreinte vocale de référence doit donc être de qualité suffisante pour pouvoir servir à l'authentification de l'utilisateur *U* le moment venu. Cette quatrième étape de vérification ou validation de l'empreinte vocale de référence est par exemple mise en oeuvre dans le module ou serveur de vérification *SrvVerif* précité. Ainsi, ce dernier reçoit de la part du serveur d'interface *SrvInterface,* l'empreinte vocale de référence préalablement générée, ainsi que des échantillons vocaux de l'utilisateur *U* captés par le dispositif de traitement vocal *Audio* utilisés pour pouvoir tester que l'empreinte vocale de référence préalablement générée permet bien d'authentifier l'utilisateur *U* à partir des échantillons vocaux captés.

Une cinquième étape, pouvant être mise en oeuvre parallèlement aux étapes précédemment décrites, consiste à obtenir des données personnelles de l'utilisateur *U,* en vue de son utilisation du service vocal. Ainsi, de la même manière que l'utilisateur *U* énonce oralement son consentement à destination du dispositif de traitement vocal *Audio,* l'utilisateur *U* est invité à fournir les données personnelles requises de manière orale. Comme tous les échantillons vocaux captés par le dispositif de traitement vocal *Audio,* le ou les échantillons comprenant les données personnelles de l'utilisateur sont transmis par ce dispositif de traitement vocal *Audio* au serveur d'interface *Srvlnterface,* pour être enregistrés (à des fins de preuve ultérieure) par le serveur de sauvegarde *SrvRec* et traités en vue de récupérer des données personnelles de l'utilisateur *U* exploitables.

Il est à noter que ces données personnelles peuvent être énoncées par l'utilisateur *U* en même temps que le consentement, par exemple s'il commence une phrase en indiquant ses coordonnées : « Mon nom est *X,* domicilié au *AAA,* et j'accepte les termes et conditions d'utilisation du service *S*. J'accepte également de partager mes données personnelles avec le service *S*. »

Ainsi, au terme de ces différentes étapes, et en utilisant uniquement des échantillons vocaux de l'utilisateur *U* captés par un dispositif de traitement vocal *Audio,* la technique proposée permet d'obtenir :
- le consentement vocal de l'utilisateur *U* aux termes et conditions d'utilisation du service vocal ;
- des données personnelles de l'utilisateur *U* nécessaires à l'utilisation du service vocal, et que l'utilisateur *U* a accepté de partagées ;
- une empreinte vocale de référence de l'utilisateur *U* pour pouvoir ensuite l'authentifier au moment de l'accès et de l'utilisation du service vocal auquel il s'est inscrit.

Comme indiqué ci-dessus, la technique proposée permet également d'assurer une sécurité renforcée au procédé d'inscription d'un utilisateur à un service vocal. En effet, lorsque des données personnelles et des données biométriques d'un utilisateur sont sauvegardées en vue de son authentification, ces données doivent être protégées de manière à ne pas être frauduleusement utilisées dans le but d'usurper l'identité de cet utilisateur. La distribution, sur différents modules ou serveurs, des différentes données/informations utilisées dans les étapes détaillées ci-dessus, permet d'obtenir un niveau de sécurité optimal, en empêchant que des accès concurrents à des données distinctes mais associées (comme par exemple un enregistrement audio et l'empreinte biométrique/vocale calculée à partir de cet enregistrement audio) puissent être réalisés.

Enfin, la technique proposée permet d'offrir une très grande amélioration en terme de consentement d'un utilisateur aux termes et conditions d'utilisation d'un service vocal, amélioration reposant sur les aspects suivants, obtenus grâce aux différentes étapes et aux différents éléments techniques décrits ci-dessus :
- une trace de l'enregistrement vocal/audio de l'utilisateur est sauvegardée, comme enregistrement de référence, de façon à ce que l'on puisse faire référence à cet enregistrement de manière légale comme preuve forte du consentement de l'utilisateur. Ainsi, en cas de litige sur le consentement de l'utilisateur, il est possible de prouver l'authenticité d'un consentement à partir d'un enregistrement audio de sa voix, dont le contenu interprétable constitue le consentement et dont l'analyse biométrique permet l'authentification de l'utilisateur ;
- une analyse biométrique est appliquée à l'enregistrement vocal de référence et conservée avec l'empreinte vocale. Cette analyse biométrique permet par exemple de s'assurer de la fiabilité de l'authentification de l'utilisateur, en testant l'empreinte vocale de référence générée avec des phrases tests énoncés par l'utilisateur. Par exemple, si le service vocal est un service de commande de pizza à livrer, l'analyse biométrique consiste à tester des phrases type de commande de pizzas avec l'empreinte vocale de référence générée. Cette analyse biométrique peut être recalculée à tout moment comme une preuve de validation de la fiabilité de l'empreinte vocale de référence, y compris lors des utilisations du service vocal par l'utilisateur. Cela permet ainsi de pouvoir mettre à jour l'empreinte vocale de référence si nécessaire, par exemple si la voix de l'utilisateur change trop, parce qu'il est malade par exemple. Dans ce cas, si la vérification vocale biométrique détecte une trop grande différence avec l'enregistrement vocal de référence, il est possible de demander à l'utilisateur de s'enregistrer à nouveau afin de renouveler à la fois l'enregistrement vocal de référence et l'empreinte vocale de référence.

### 5.3. Autres caractéristiques techniques et avantages

Les modules ou serveurs décrit ci-dessus peuvent concrètement se présenter sous la forme de serveur physique et/ou d'un ensemble de serveurs répartis dans une infrastructure de traitement décentralisée de type « cloud ». Le serveur *SrvInterface* est lui-même connecté à un ou plusieurs serveurs offrant des fonctions complémentaires : par exemple un serveur marchand *SrvService,* un serveur d'enregistrement *SrvRec,* un serveur de génération d'empreinte vocale *SrvGen,* un serveur de consentement *SrvOptIn,* un serveur de vérification biométrique *SrvVerif,* etc.). Un terminal de communication, par exemple un smartphone peut également être connecté à un réseau de communication et au même serveur d'interface *SrvInterface* que celui du dispositif de traitement vocal *Audio.*

De tels moyens peuvent se présenter sous la forme de processeurs dédiés ou de processeurs sécurisés, spécifiquement dédiés à la mise en oeuvre de ces opérations d'authentification de l'utilisateur.

## Revendications

1. Procédé d'inscription d'un utilisateur à un service vocal, procédé mis en oeuvre par un serveur d'interface, **caractérisé en ce qu'**il comprend les étapes suivantes :
- obtention (10), par l'intermédiaire d'un dispositif électronique de traitement vocal comprenant au moins un composant de captation d'échantillons audio, d'au moins un échantillon vocal dudit utilisateur ;
- obtention (11), à partir dudit au moins un échantillon vocal dudit utilisateur, d'au moins une information de validation d'un consentement dudit utilisateur aux conditions d'accès audit service vocal,
- obtention, à partir dudit au moins un échantillon vocal dudit utilisateur, d'au moins une donnée personnelle associée audit utilisateur,
- calcul, à partir dudit au moins un échantillon vocal dudit utilisateur, d'une empreinte
vocale de référence associée audit utilisateur,
lesdites étapes délivrant une inscription dudit utilisateur audit service vocal mise en oeuvre uniquement de manière vocale à partir d'une combinaison de ladite au moins une information de validation d'un consentement et de ladite d'au moins une donnée personnelle associée audit utilisateur obtenues à partir dudit au moins un échantillon vocal dudit utilisateur.

2. Procédé d'inscription selon la revendication 1, **caractérisé en ce que** ladite étape d'obtention (11) d'au moins une information de validation d'un consentement dudit utilisateur comprend les sous-étapes suivantes :
- traitement dudit au moins un échantillon vocal dudit utilisateur délivrant au moins une information textuelle interprétable ;
- interprétation de ladite au moins une information textuelle interprétable délivrant ladite au moins une information de validation d'un consentement dudit utilisateur.

3. Procédé d'inscription selon la revendication 1, **caractérisé en ce que** ledit au moins un échantillon vocal à partir duquel est obtenue ladite au moins une information de validation d'un consentement dudit utilisateur est associé audit utilisateur et sauvegardé comme preuve dudit consentement dudit utilisateur.

4. Procédé d'inscription selon la revendication 1, **caractérisé en ce qu'**il comprend une étape de vérification de fiabilité de ladite empreinte vocale de référence avec au moins un deuxième échantillon vocal dudit utilisateur.

5. Serveur d'interface, **caractérisé en ce qu'**il comprend :
- des moyens d'obtention, par l'intermédiaire d'un dispositif électronique de traitement vocal comprenant au moins un composant de captation d'échantillons audio, d'au moins un échantillon vocal d'un utilisateur ;
- des moyens d'obtention, à partir dudit au moins un échantillon vocal dudit utilisateur, d'au moins une information de validation d'un consentement dudit utilisateur aux conditions d'accès à un service vocal,
- des moyens d'obtention, à partir dudit au moins un échantillon vocal dudit utilisateur, d'au moins une donnée personnelle associée audit utilisateur,
- des moyens de calcul, à partir dudit au moins un échantillon vocal dudit utilisateur, d'une empreinte vocale de référence associée audit utilisateur,
lesdits moyens délivrant une inscription dudit utilisateur audit service vocal mise en oeuvre uniquement de manière vocale à partir d'une combinaison de ladite au moins une information de validation d'un consentement et de ladite d'au moins une donnée personnelle associée audit utilisateur obtenues à partir dudit au moins un échantillon vocal dudit utilisateur.

6. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé selon la revendication 1, lorsqu'il est exécuté sur un ordinateur.

## Patentansprüche

1. Verfahren zur Registrierung eines Benutzers für einen Sprachdienst, wobei das Verfahren von einem Schnittstellenserver implementiert wird, und **dadurch gekennzeichnet ist, dass** es die folgenden Schritte umfasst:
- Erhalten (10), mittels einer elektronischen Vorrichtung zur Sprachverarbeitung, die mindestens eine Komponente zum Erfassen von Audioproben umfasst, von mindestens einer Sprachprobe des Benutzers;
- Erhalten (11), ausgehend von der mindestens einen Sprachprobe des Benutzers, von mindestens einer Information der Validierung einer Zustimmung des Benutzers zu den Zugriffbedingungen für den Sprachdienst,
- Erhalten, ausgehend von der mindestens einen Sprachprobe des Benutzers, mindestens einer persönlichen Angabe, die dem Benutzer zugeordnet ist,
- Berechnen, ausgehend von der mindestens einen Sprachprobe des Benutzers, eines Referenz-Sprachabdrucks, der dem Benutzer zugeordnet ist,
wobei die Schritte eine Registrierung des Benutzers für den Sprachdienst bereitstellen, der nur auf Sprachbasis implementiert wird ausgehend von einer Kombination der mindestens einen Information der Validierung einer Zustimmung und der mindestens einen persönlichen Angabe, die dem Benutzer zugeordnet ist, die ausgehend von der mindestens einen Sprachprobe des Benutzers erhalten werden.

2. Registrierungsverfahren nach Anspruch 1, **dadurch gekennzeichnet, dass** der Schritt zum Erhalten (11) von mindestens einer Information der Validierung einer Zustimmung des Benutzers die folgenden Teilschritte umfasst:
- Verarbeiten der mindestens einen Sprachprobe des Benutzers, die mindestens eine interpretierbare Textinformation bereitstellt;
- Interpretieren der mindestens einen interpretierbaren Textinformation, die die mindestens eine Information der Validierung einer Zustimmung des Benutzers bereitstellt.

3. Registrierungsverfahren nach Anspruch 1, **dadurch gekennzeichnet, dass** die mindestens eine Sprachprobe, von der ausgehend die mindestens eine Information der Validierung einer Zustimmung des Benutzers erhalten wird, dem Benutzer zugeordnet wird und als Nachweis der Zustimmung des Benutzers gespeichert wird.

4. Registrierungsverfahren nach Anspruch 1, **dadurch gekennzeichnet, dass** es einen Schritt der Überprüfung der Zuverlässigkeit des Referenz-Sprachabdrucks mit mindestens einer zweiten Sprachprobe des Benutzers umfasst.

5. Schnittstellenserver, **dadurch gekennzeichnet, dass** er umfasst:
- Mittel zum Erhalten, mittels einer elektronischen Vorrichtung zur Sprachverarbeitung, die mindestens eine Komponente zum Erfassen von Audioproben umfasst, von mindestens einer Sprachprobe eines Benutzers;
- Mittel zum Erhalten, ausgehend von mindestens einer Sprachprobe des Benutzers, von mindestens einer Information der Validierung einer Zustimmung des Benutzers zu den Zugriffbedingungen für einen Sprachdienst,
- Mittel zum Erhalten, ausgehend von der mindestens einen Sprachprobe des Benutzers, von mindestens einer persönlichen Angabe, die dem Benutzer zugeordnet ist,
- Mittel zum Berechnen, ausgehend von der mindestens einen Sprachprobe des Benutzers, eines Referenz-Sprachabdrucks, der dem Benutzer zugeordnet ist,
wobei die Mittel eine Registrierung des Benutzers für den Sprachdienst bereitstellen, der nur auf Sprachbasis implementiert wird ausgehend von einer Kombination von mindestens einer Information der Validierung einer Zustimmung und mindestens einer persönlichen Angabe, die dem Benutzer zugeordnet ist, die ausgehend von der mindestens einen Sprachprobe des Benutzers erhalten werden.

6. Computerprogrammprodukt, das von einem Kommunikationsnetz heruntergeladen werden kann und/oder auf einem computerlesbaren Medium gespeichert werden kann und/oder durch einen Mikroprozessor ausführbar ist, und **dadurch gekennzeichnet ist, dass** es Programmcodebefehle zur Ausführung eines Verfahrens nach Anspruch 1 umfasst, wenn es auf einem Computer ausgeführt wird.

## Claims

1. A method of registering a user for a voice service, which method is implemented by an interface server, the method being **characterized in that** it comprises the following steps:
- obtaining (10), by means of an electronic voice processing device comprising at least one component for capturing audio samples, at least one voice sample from said user;
- obtaining (11), from said at least one voice sample from said user, at least one item of information validating said user's consent to the conditions of access to said voice service,
- obtaining, from said at least one voice sample from said user, at least one piece of personal data associated with said user,
- calculation, on the basis of said at least one voice sample from said user, of a reference voiceprint associated with said user,
said steps delivering a registration of said user to said voice service implemented solely vocally from a combination of said at least one consent validation information and said at least one personal data associated with said user obtained from said at least one voice sample of said user.

2. A registration method as claimed in claim 1, **characterised in that** said step of obtaining (11) at least one piece of information for validating a consent of said user comprises the following sub-steps:
- processing of said at least one voice sample of said user delivering at least one interpretable textual information;
- interpretation of said at least one interpretable textual information delivering said at least one consent validation information to said user.

3. A registration method as claimed in claim 1, **characterised in that** said at least one voice sample from which said at least one consent validation information of said user is obtained is associated with said user and saved as evidence of said consent of said user.

4. A registration method as claimed in claim 1, **characterised in that** it comprises a step of verifying the reliability of said reference voiceprint with at least one second voice sample from said user.

5. interface server, **characterised in that** it comprises :
- means for obtaining, by means of an electronic voice processing device comprising at least one component for capturing audio samples, at least one voice sample from a user;
- means for obtaining, from said at least one voice sample of said user, at least one item of information for validating said user's consent to the conditions of access to a voice service,
- means for obtaining, from said at least one voice sample from said user, at least one piece of personal data associated with said user,
- means for calculating, on the basis of at least one voice sample from said user, a reference voiceprint associated with said user,
said means delivering a registration of said user to said voice service implemented solely by voice on the basis of a combination of said at least one consent validation information item and said at least one data item associated with said user obtained from said at least one voice sample from said user.

6. A computer program product downloadable from a communications network and/or stored on a computer-readable medium and/or executable by a microprocessor, **characterised in that** it comprises program code instructions for the execution of a method according to claim 1, when executed on a computer.
